# EUROPÄISCHE PATENTANMELDUNG

(11) **EP 1 139 597 A2**
(43) Veröffentlichungstag der Anmeldung: **04.10.2001**
(21) Anmeldenummer: 01440059.2
(22) Anmeldetag: 08.03.2001
(51) Int. Cl.: H04J 13/00, H04J 14/02, H04J 14/08

(54) **Optisches Netzwerk**

(30) Priorität: 28.03.2000 DE 10015099
(71) Anmelder: ALCATEL, 75008 Paris (FR)
(72) Erfinder: Pfeiffer, Thomas, Dr., 70569 Stuttgart (DE)
(74) Vertreter: Rausch, Gabriele, Dr.

(57) **Zusammenfassung**

Es wird ein optisches Netzwerk zu Übertragung von optischen Datensignalen vorgeschlagen wobei ein erste Netzwerk mit einem WDM-Verfahren arbeitet, ein zweites Netzwerk ein CDM-Verfahren und ein drittes Netzwerk ein Zeitmultiplex-Verfahren verwendet.

## Beschreibung

Optische Netzwerke zur Übertragung von optischen Datensignalen sind aus der Literatur bekannt. Dabei wird grundsätzlich zwischen Zugangsnetzen und Transportnetzen für die Übertragung von Daten unterschieden. Die Zugangsnetze, die den Zugang zum Verbraucher gewährleisten, zeichnen sich durch komplexe Netzstrukturen aus. Die Systemvielfalt dieser vor allem dienstespezifischen Zugangssysteme ist sehr groß. Innerhalb eines Kommunikationsnetzes hat das Zugangsnetz die Aufgabe, den Teilnehmern den Zugang zu Vermittlungseinrichtungen beispielsweise Servern zu ermöglichen. Jeder Teilnehmer muss zunächst von seinem Standort aus an einen Versorgungsknoten angeschlossen werden, damit er die angebotenen Dienste überhaupt in Anspruch nehmen kann. Für den Anschluss der Teilnehmer sind grundsätzlich alle nachrichtentechnischen Mittel geeignet. Im Fernnetz wird der Fernmeldeverkehr konzentriert in Punkt-zu-Punkt-Verbindungen zwischen den verschiedenen Netz- und Vermittlungsknoten geführt. Im Zugangsnetz hingegen sind sehr unterschiedliche Anforderungen zu erfüllen. Es müssen für das technische Zusammenwirken zwischen der Teilnehmervermittlungsstelle und den Endstellen standardisierte Funktionen (BORSCHT) implementiert sein. Die Teilnehmer selbst sind nicht homogen über den ganzen Zugangsbereich verteilt, sondern es gibt lokale Bereiche mit hohen Teilnehmerdichten, aber auch Bereiche in denen die Teilnehmer nur vereinzelt auftreten. Ausgehend vom jeweiligen Kommunikationsbedarf können sehr unterschiedliche Teilnehmergruppen wie Privatkunden, kleinere oder größere Geschäftskunden unterschieden werden, denen entsprechend übertragungstechnische Lösungen angeboten werden müssen. Gerade die Zugangsnetze erfordern eine große Investitionsbereitschaft des Netzbetreibers. Die Komponenten sind Umwelteinflüssen ausgesetzt und müssen jeweils den Teilnehmern des Zugangsnetzes einzeln zur Verfügung gestellt werden.

Um die Wirtschaftlichkeit von Zugangsnetzen zu verbessern, wird die erfindungsgemäße Netzstruktur vorgestellt, die die o.a. Überlegungen berücksichtigt.

Das vorgeschlagene optische Netzwerk hat den Vorteil, dass im Zugangsbereich einfache Komponenten verwendet werden. Zudem wird durch die Kombination unterschiedlicher Übertragungsverfahren eine hohe Flexibilität für Änderungen im Zugangsbereich bereitgestellt. Die Kosten für die Umsetzung von einem Übertragungsverfahren in ein anderes Übertragungsverfahren werden durch die Verwendung von neuartigen Konvertern reduziert. Das erfindungsgemäße optische Netzwerk kombiniert im Zugangsbereich ein Zeitmultiplexverfahren in einer Netzebene mit einem Code-Multiplexverfahren in einer zweiten Netzebene. Das optische Netzwerk wird weiterhin zu einem Wellenlängenmultiplex auf innerstädtischem Niveau erweitert. Die Verbindung von den Teilnehmern zur zentralen Vermittlungsstelle erfolgt im gesamten Netz rein optisch. Erst von der letzten Netzebene, der Wellenlängenmultiplex Netzebene, aus wird die Verbindung mit einem Transportnetz hergestellt, indem die einlaufenden optischen Signale empfangen, elektrisch regeneriert und den Erfordernissen des Transportnetzes entsprechend umgesetzt werden.

Durch die in den Unteransprüchen aufgeführten Maßnahmen sind vorteilhafte Weiterbildungen und Verbesserungen des im Hauptanspruch angegebenen optischen Netzwerkes zu erreichen.

Besonders vorteilhaft ist die Verwendung eines speziellen Konverters für die Umsetzung von Zeitmultiplex- auf Code-Multiplex-Signale. Dieser Konverter stellt eine kostengünstige Lösung dar, um eine Konversion von Zeitmultiplex auf Code-Multiplex-Signale zu realisieren. Die Konversion erfolgt dabei rein auf optischem Wege. Ausführungsbeispiele der Erfindung sind in den Zeichnungen dargestellt und in der nachfolgenden Beschreibung näher erläutert.

Es zeigt
- Figur 1:: ein erfindungsgemäßes optisches Netzwerk,
- Figur 2:: ein Beispiel für die Auslegung eines optischen Netzwerkes,
- Figur 3:: einen Ausschnitt aus der zweiten und dritten Netzebene.

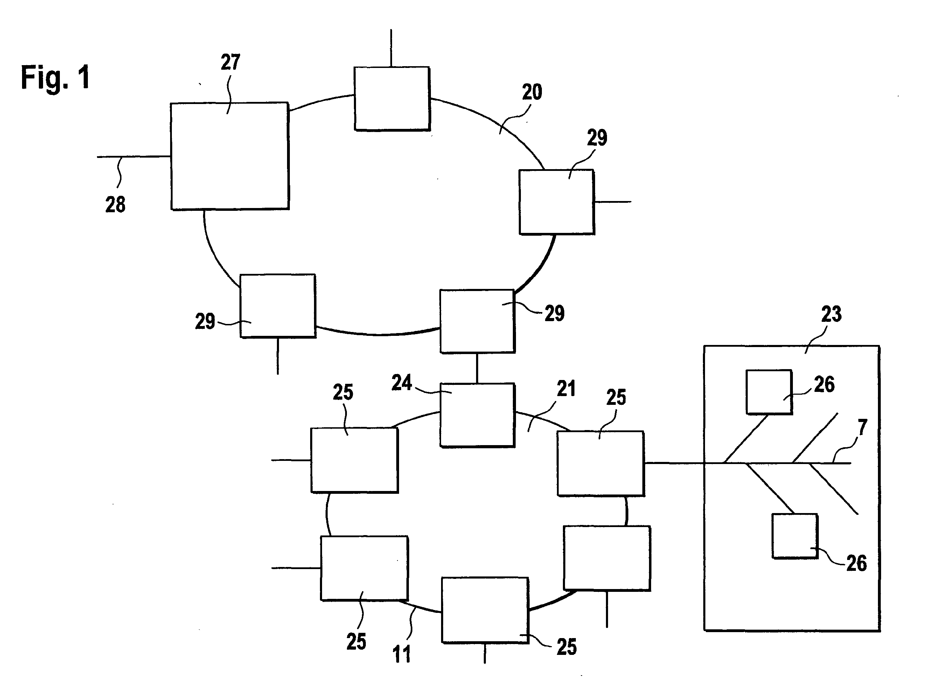

Figur 1 zeigt einen Überblick über das erfindungsgemäße optische Netzwerk. Eine erste Netzebene 20 ist dargestellt als eine Ringverbindung, in die WDM (Wavelength Division Multiplex)-Anschlüsse 29 integriert sind. Diese WDM-Anschlüsse 29 können Sender, Empfänger oder Knotenpunkte zu anderen Ringsystemen sein. Der WDM-Ring enthält einen Anschluss 27 (Headend), der mit einem Transportnetz 28 verbunden ist. Über einen der WDM-Anschlüsse 29 ist eine zweite Netzebene 21 angeschlossen. Der Anschluss erfolgt über einen der WDM-Anschlüsse 29 und ein optisches Add-Drop-Modul 24. In der zweiten Netzebene 21, die als CDM (Code Division Multiplex)-Ring darstellt ist, sind Konverter 25 integriert. Die Konverter 25 sind jeweils mit einem lokalen Zugangsstrang einer dritten Netzebene 23 verbunden. Innerhalb der dritten Netzebene sind Sender 26 an eine Übertragungsleitung 7 angeschlossen. Die Sender 26 sind für die Übertragung von Zeitmultiplexsignalen spezifiziert.

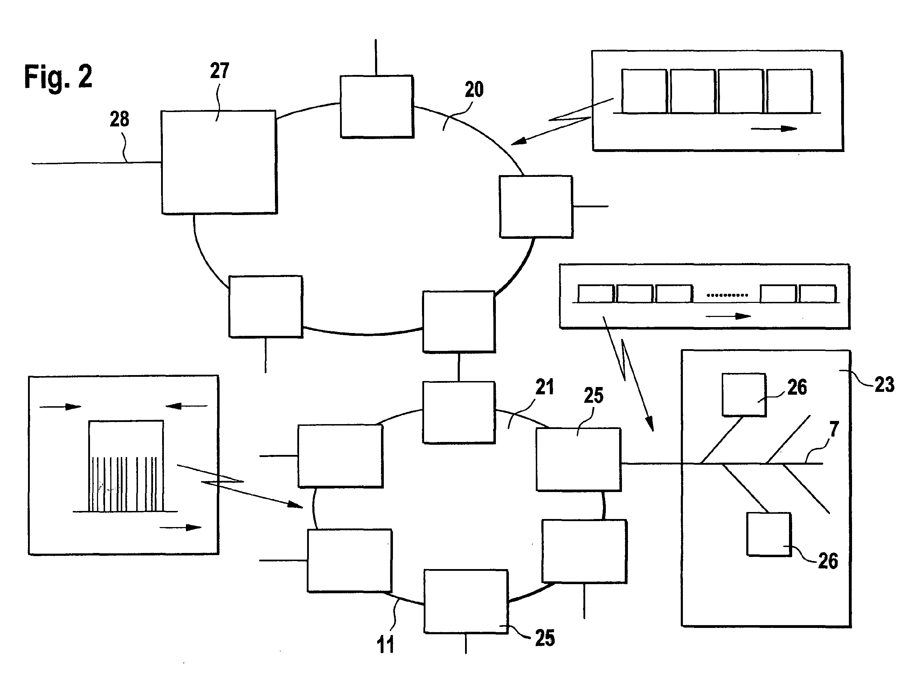

Figur 2 zeigt den gleichen Netzwerkaufbau wobei ein Ausführungsbeispiel für Kanalbelegungen integriert ist. Die Sender 26 in der dritten Netzwerkebene 23 arbeiten mit einem Zeitmultiplexverfahren. In einer Ausführungsform senden die Sender 26 mit einer Datenraten von 2,5 Gbit/s bezogen auf ihren ihn zu gewiesenen jeweiligen Zeitschlitz. Beispielsweise können an eine solche Übertragungsleitung 10 unterschiedliche Sender bei unterschiedlichen Teilnehmern betrieben werden. Bei den Sendern handelt es sich um Laserdioden, die auf jede bekannte Weise in ihrer Intensität moduliert werden. Die zeitgemultiplexten Signale werden im Konverter 25 umgesetzt. Pro Konverter wird ein CDM-Kanal belegt. In der beispielhaften Darstellung werden 5 Konverter für den Anschluss von jeweils 5 Zeitmultiplex-Ebenen eingesetzt. Die CDM-Signale werden auf eine Wellenlängen-Bandbreite von 8 bis 10 nm kodiert. Daraus ergibt sich in dem gewählten Zahlenbeispiel eine Datenrate von 5 x 2,5 Gbit/s somit 12,5 Gbit/s kontinuierliche Datenrate. Über das optische Add-Drop-Modul 24 wird der kodierte Wellenlängenbereich von 8 bis 10 nm als ein Wellenlängenbereich des Wellenlängenmultiplex in die erste Netzebene 20 gemultiplext. Im gewählten Beispiel werden 4 optisch kodierte CDM-Ebenen an die erste Netzebene 20, den WDM Ring, angeschlossen. Dadurch sind Datenraten von 4 x 12,5 Gbit/s gleich 50 Gbit/s bei einer Bandbreite von 40 nm möglich. In dem gewählten Beispiel ergibt sich die Anzahl von Kanälen, die mit einem solchen optischen Netzwerk übertragen werden können zu 200. Die Datenraten betragen dabei 2, 5 Gbit/s Spitzenwerte bei einem durchschnittlichen Wert von 250 Mbit/s pro Kanal. Für den Datenstrom zwischen der ersten Netzebene 20 und der dritten Netzebene 23 (Abwärtsrichtung) gilt das vorher gesagte in umgekehrter Weise. Beispielsweise werden auf der ersten Netzebene 20 4 WDM-Lasersender mit jeweils 12,5 Gbit/s pro Sender verwendet. Der Laser ist jeweils auf den Wellenlängenbereich eines einzelnen CDM-Rings der zweiten Netzebene 21 abgestimmt. Die Umsetzung zwischen CDM- und TDM-Signal erfolgt im Konverter 25 durch Analyse des CDM-Signals und Multiplexen in ein TDM-Signal.

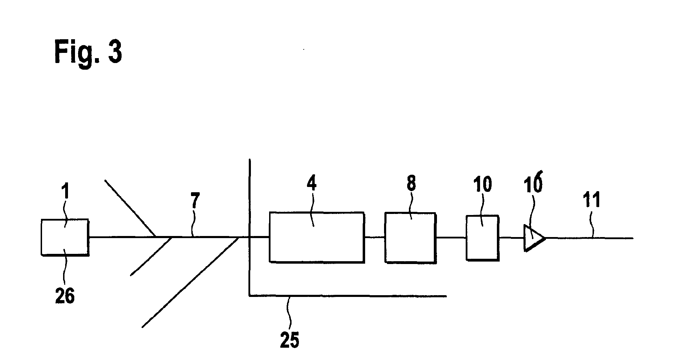

Figur 3 zeigt eine Realisierungsmöglichkeit für die Verbindung zwischen zweiter Netzebene 21 und dritter Netzebene 23. Eine Laserlichtquelle 1 in einem Sender 26 ist mit einem Konverter 25 verbunden. Der Konverter 25 weist mehrere Eingänge sowie einen Ausgang auf. Eingänge wie Ausgänge sind mit optischen Übertragungstrecken 7, 11 verbunden. Eingangsseitig liegen die unterschiedlichen Laserquellen der Sender 26 an.. Die Übertragungsstrecke 11 verbindet den Konverter 25 mit einem optischen Add-Drop-Modul 24. Die optischen Eingänge des Konverters 25 stehen mit einem Emitter 4 für breitbandiges Licht und anschliessend mit einem optischen Kodierer 8 in Verbindung. Der Kodierer 8 ist mit einem spektralen Bandselektionsmittel 10 verbunden. Der Ausgang des Bandselektionsmittels 10 ist mit dem Eingang eines Verstärkers 16 verbunden. In einer anderen Ausführungsform erfolgt die WDM-Bandselektion erst im OADM 24 bzw. dem zugehörigen WDM-Koppler. Der Ausgang des Verstärkers 16 liegt an der Übertragungsstrecke 11 an. Zum Verständnis der breitbandigen Lichtquelle bestehend aus moduliertem Laser sowie einem Emitter für spontane verstärkte Emission (ASE) wird auf die Patentanmeldung 100..... verwiesen. Die Laserdiode 1 im Sender 26 sendet jeweils in einem Zeitschlitz ihre modulierten Daten aus. Im Konverter des Übertragungssystems ist das eingehende Signal mit einem Emitter 4 für verstärkte spontane Emission, beispielsweise einem Halbleiterverstärker verbunden. Durch diese Stufe ist die Wandlung von einem schmalbandigen zu einem breitbandigen Signal gegeben. Anschließend kann das breitbandige Signal optisch kodiert werden, wobei unterschiedliche optische Filter wie Fabry-Perot-Filter oder Mach-Zehnder-Filter verwendet werden können. Auf der dritten Netzebene 23 wird die Übertragungsstrecke mit Zeitmultiplexsignalen schmalbandig überbunden. Gerade die dritte Netzebene lässt sich bezüglich der Dispersionseffekte durch unterschiedliche Umgebungen sowie durch unterschiedlich lange Übertragungsstrecken schwer definieren. Durch die Übertragung der Signale mit optisch schmalbandigen Signalen ist die dritte Netzebene unempfindlich gegenüber Schwankungen der Umgebungsbedingungen und einfach an die Ansprüche der Teilnehmer anpassbar. Über die zweite Netzebene 21 werden die unterschiedlichen zeitgemultiplexten Signale der dritten Ebene 23 durch ein optisches Kodieren miteinander kombiniert. Dadurch kann die Anzahl der verfügbaren Kanäle im Teilnehmerbereich deutlich erhöht werden. Die Verwendung eines Emitters für verstärkte spontane Emission (ASE) ist dabei eine einfache kostengünstige optische Möglichkeit zur Umsetzung der Signale. Durch die Umsetzung in die erste Netzebene mit Wellenlängenmultiplex wird die Kanalzahl wiederum deutlich erhöht. Das verwendete Wellenlängenmultiplex mit Wellenlängenbereichen in der Größenordnung von 8 bis 10 nm erlaubt es zudem, einfache optische Filter zu verwenden. Es ist nicht erforderlich eine strenge Selektion der benutzten Bauelemente und eine strenge Spezifikation auf Wellenlängen vorzuschreiben. Ebensowenig ist es notwendig im erfindungsgemäßen optischen Netz die Sender in den Teilnehmerstationen besonderen Spezifikationen zu unterwerfen. Gerade hier ist es von Vorteil, kostengünstige Laserdioden als Sender verwenden zu können. Auch die Umsetzung in den Konvertern ist unempfindlich gegenüber Schwankungen der Umgebungsbedingungen. Temperaturschwankungen sowie unterschiedliche Toleranzen in der Spezifikation der Komponenten sind auch für das Wellenlängenmultiplex unkritisch, da breite Wellenlängenbereiche verwendet werden. Die Umsetzung der 20 CDM-/WDM- Kanäle an das Transportnetz 28 im oben erklärten Beispiel erfolgt zentral im Anschluss 27 (Headend) . Das Multiplexen in entsprechende TDM-Signale für das Transportnetz erfolgt elektronisch.

## Patentansprüche

1. Optisches Netzwerk zur Übertragung von optischen Datensignalen mit einer ersten Netzwerkebene(20), die mit einem WDM-Verfahren arbeitet, und über optische Add/Drop-Module (24) Verbindungen zu einer zweiten Netzwerkebene (21) aufweist,
die zweite Netzwerkebene (21) besteht aus einem Datennetz unter Verwendung eines optische codierten Multiplexverfahrens (CDM) und besitzt Konverter (25) zur Umsetzung von Zeitmultiplex (TDM) -Signale auf CDM-Signalen und umgekehrt,
die Konverter (25) sind verbunden mit einer dritten Netzebene (23), die ein Zeitmultiplexverfahren (TDM) zur Datenübermittlung verwendet.

2. Optisches Netzwerk nach Anspruch 1, **dadurch gekennzeichnet, dass** die erste Netzwerkebene (20) eine Anzahl von WDM Wellenlängenbereiche verwendet, die der Zahl der angeschlossenen Datennetze der zweiten Netzebene entspricht.

3. Optisches Netzwerk nach Anspruch 1, **dadurch gekennzeichnet, dass** die Konverter (25) einen Emitter (4) für spontane verstärke Strahlung (ASE) mit nachfolgendem optischen Kodierer (8) enthalten, an denen eingangsseitig TDM Signale der dritten Netzebene anliegen.
